(19) Europäisches Patentamt
European Patent Office
Office européen des brevets

(11) **EP 4 615 073 A1**

(12) **EUROPEAN PATENT APPLICATION**
published in accordance with Art. 153(4) EPC

(43) Date of publication:
**10.09.2025 Bulletin 2025/37**

(21) Application number: **22964113.9**

(22) Date of filing: **04.11.2022**

(51) International Patent Classification (IPC):
***H04W 56/00*** (2009.01)

(52) Cooperative Patent Classification (CPC):
**H04W 56/00**

(86) International application number:
**PCT/CN2022/130109**

(87) International publication number:
**WO 2024/092811 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HU, Yi**
  **Dongguan, Guangdong 523860 (CN)**
• **LI, Haitao**
  **Dongguan, Guangdong 523860 (CN)**
• **WU, Zuomin**
  **Dongguan, Guangdong 523860 (CN)**

(74) Representative: **RGTH**
**Patentanwälte PartGmbB**
**Neuer Wall 10**
**20354 Hamburg (DE)**

(54) **COMMUNICATION METHOD AND COMMUNICATION APPARATUS**

(57) Provided are a communication method and a communication apparatus. The method comprises: after receiving a first message sent by a network device, a terminal device runs a timer, wherein the first message is used for the terminal device to perform frequency domain offset adjustment and/or timing advance (TA) adjustment; and the terminal device determines, according to the running state of the timer, whether uplink out-of-synchronization has occurred. **In** the method of embodiments of the present application, after introducing closed-loop frequency domain offset adjustment, the terminal device can determine whether uplink out-of-synchronization has occurred.

FIG. 6

**Description**

**TECHNICAL FIELD**

This application relates to the field of communications technologies, and more specifically, to a communication method and a communications apparatus.

**BACKGROUND**

With the development of communications technologies, a closed-loop frequency domain offset adjustment mechanism is introduced in a non-terrestrial network (non terrestrial networks, NTN) system. However, it is currently unclear how a terminal device determines uplink synchronization or uplink out-of-synchronization after closed-loop frequency domain offset adjustment is introduced.

**SUMMARY**

Embodiments of this application provide a communication method and a communications apparatus. The following describes various aspects involved in embodiments of this application.

According to a first aspect, there is provided a communication method, applied to a terminal device. The communication method includes: running, by the terminal device, a timer upon receiving a first message transmitted by a network device, where the first message is used for performing frequency domain offset adjustment and/or timing advance TA adjustment by the terminal device; and determining, by the terminal device based on a running state of the timer, whether uplink out-of-synchronization occurs.

According to a second aspect, there is provided a communication method. The communication method includes: determining, by a network device, a first message based on a reception status of an uplink signal transmitted by a terminal device, where the first message is used for performing frequency domain offset adjustment and/or timing advance TA adjustment by the terminal device; and transmitting, by the network device, the first message to the terminal device, so that the terminal device runs a timer upon receiving the first message.

According to a third aspect, there is provided a communications apparatus. The communications apparatus includes: a running unit, configured to run a timer upon receiving a first message transmitted by a network device, where the first message is used for performing frequency domain offset adjustment and/or timing advance TA adjustment by the apparatus; and a determining unit, configured to determine, based on a running state of the timer, whether uplink out-of-synchronization occurs.

According to a fourth aspect, there is provided a communications apparatus. The communications apparatus includes: a determining unit, configured to determine a first message based on a reception status of an uplink signal transmitted by a terminal device, where the first message is used for performing frequency domain offset adjustment and/or timing advance TA adjustment by the terminal device; and a transmitting unit, configured to transmit the first message to the terminal device, so that the terminal device runs a timer upon receiving the first message.

According to a fifth aspect, there is provided a communications apparatus. The communications apparatus includes a memory, a transceiver, and a processor, where the memory is configured to store a program, the processor performs data transmission and reception by using the transceiver, and the processor is configured to invoke the program in the memory to cause the communications apparatus to execute the method according to the first aspect.

According to a sixth aspect, there is provided a communications apparatus. The communications apparatus includes a memory, a transceiver, and a processor, where the memory is configured to store a program, the processor performs data transmission and reception by using the transceiver, and the processor is configured to invoke the program in the memory to cause the communications apparatus to execute the method according to the second aspect.

According to a seventh aspect, there is provided a communications apparatus. The communications apparatus includes a processor configured to invoke a program from a memory to cause the communications apparatus to execute the method according to the first aspect.

According to an eighth aspect, there is provided a communications apparatus. The communications apparatus includes a processor configured to invoke a program from a memory to cause the communications apparatus to execute the method according to the second aspect.

According to a ninth aspect, there is provided a chip. The chip includes a processor, configured to invoke a program from a memory to cause a device on which the chip is installed to perform the method according to the first aspect.

According to a tenth aspect, there is provided a chip. The chip includes a processor, configured to invoke a program from a memory to cause a device on which the chip is installed to perform the method according to the second aspect.

According to an eleventh aspect, a computer-readable storage medium is provided, where a program is stored on the computer-readable storage medium, and the program causes a computer to execute the method according to the first aspect.

According to a twelfth aspect, a computer-readable storage medium is provided, where a program is stored on the computer-readable storage medium, and the program causes a computer to execute the method according to the second aspect.

According to a thirteenth aspect, there is provided a computer program product. The computer program product includes a program, where the program causes a computer to execute the method according to the first aspect.

According to a fourteenth aspect, there is provided a computer program product. The computer program product includes a program, where the program causes a computer to execute the method according to the second aspect.

According to a fifteenth aspect, there is provided a computer program. The computer program causes a computer to execute the method according to the first aspect.

According to a sixteenth aspect, there is provided a computer program. The computer program causes a computer to execute the method according to the second aspect.

In embodiments of this application, after closed-loop frequency domain offset adjustment is introduced, the terminal device may determine, based on the running state of the first timer, whether uplink out-of-synchronization occurs.

## BRIEF DESCRIPTION OF DRAWINGS

FIG. 1 is an example diagram of a wireless communications system to which embodiments of this application are applied.

FIG. 2 is a schematic diagram of a transparent payload network architecture.

FIG. 3 is a schematic diagram of a regenerative payload network architecture.

FIG. 4 is an example diagram of a timing relationship in an NTN system.

FIG. 5 is an example diagram of another timing relationship in an NTN system.

FIG. 6 is a schematic flowchart of a communication method according to an embodiment of this application.

FIG. 7 is a schematic diagram of determining uplink out-of-synchronization according to an embodiment of this application.

FIG. 8 is a schematic diagram of determining uplink out-of-synchronization according to another embodiment of this application.

FIG. 9 is a schematic diagram of determining uplink out-of-synchronization according to still another embodiment of this application.

FIG. 10 is a schematic diagram of determining uplink out-of-synchronization according to still another embodiment of this application.

FIG. 11 is a schematic structural diagram of a communications apparatus according to an embodiment of this application.

FIG. 12 is a schematic structural diagram of a communications apparatus according to another embodiment of this application.

FIG. 13 is a schematic structural diagram of an apparatus according to an embodiment of this application.

## DESCRIPTION OF EMBODIMENTS

Technical solutions in this application are described below with reference to the accompanying drawings.

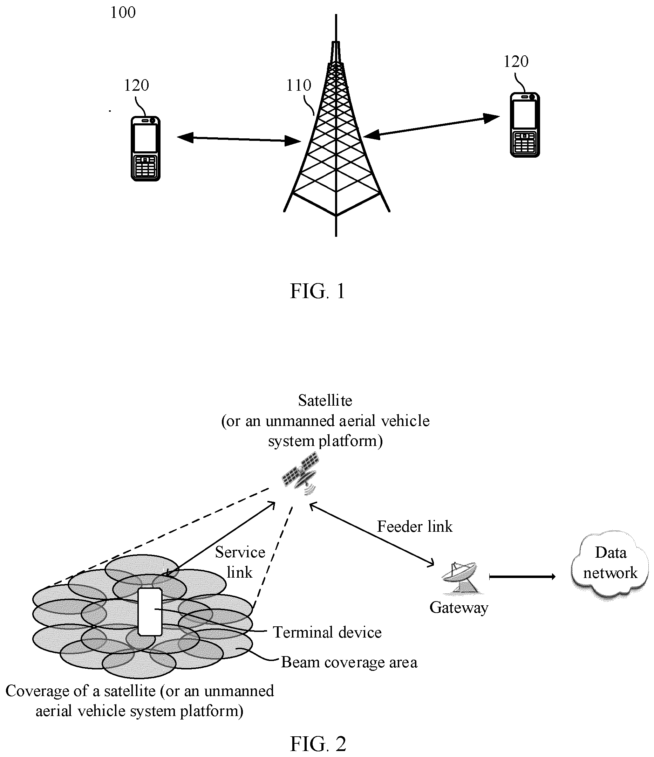

FIG. 1 shows a wireless communications system 100 to which embodiments of this application are applied. The wireless communications system 100 may include a network device 110 and a user equipment (user equipment, UE) 120. The network device 110 may communicate with the UE 120. The network device 110 may provide communication coverage for a specific geographic area, and may communicate with the UE 120 within the coverage. The UE 120 may access a network (for example, a wireless network) by using the network device 110.

FIG. 1 exemplarily shows one network device and two UEs. Optionally, the wireless communications system 100 may include a plurality of network devices, and another quantity of terminal devices may be included within coverage of each network device, which is not limited in embodiments of this application. Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The UE in embodiments of this application may be a device providing a user with voice and/or data connectivity and capable of connecting people, objects, and machines, such as a handheld device or vehicle-mounted device having a wireless connection function. The UE in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the UE. The network device may also be referred to as an access network device or a radio access network device. For example, the network device may be a base station. The network device in embodiments of this application may be a radio access network (radio access network, RAN) node (or device) that connects the UE to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof.

In some embodiments, the network device may be stationary or mobile. For example, a helicopter or an unmanned aerial vehicle may be configured to function as a mobile network device, and one or more cells may move depending on a location of the mobile network device. In other examples, a helicopter or an unmanned aerial vehicle may be configured to function as a device that communicates with another network device. In some embodiments, the network device may be a CU or a DU, or the network device may include a CU and a DU, or the network device may further include an AAU.

It should be understood that the network device may be deployed on land, including being indoors or outdoors, handheld, or vehicle-mounted, may be deployed on a water surface, or may be deployed on a plane, a balloon, or a satellite in the air. In embodiments of this application, the network device and a scenario in which the network device is located in embodiments of this application are not limited.

It should also be understood that all or some of functions of the network device and the UE in this application may also be implemented by software functions running on hardware, or by virtualization functions instantiated on a platform (for example, a cloud platform).

The technical solutions in embodiments of this application may be applied to a non-terrestrial network (non terrestrial networks, NTN) system. The NTN provides a user with communication services in a non-terrestrial manner. The non-terrestrial manner may include, for example, a satellite (satellite) or an unmanned aircraft system platform (UAS platform).

For terrestrial network communication, in a scenario such as a sea, a mountain, or a desert, a communications device cannot be set up for land communication. Alternatively, considering construction and operation costs of the communications device, land communication generally does not cover a sparsely populated area. The NTN has many advantages over terrestrial network (terrestrial network, TN) communication. First, NTN communication may not be limited by a user area. The NTN communications network is not limited by an area. In theory, a satellite can orbit the earth, so every corner of the earth can be covered by satellite communication. In addition, an area coverable by an NTN communications device is far larger than an area covered by a terrestrial communications device. For example, in satellite communication, a satellite may cover a relatively large terrestrial area. Second, NTN communication has great social values. NTN communication may implement coverage at a low cost, for example, may cover remote mountains or poor and backward countries or regions at a low cost by using satellite communication. This enables people in these regions to enjoy advanced voice communication and mobile internet technologies, which helps narrow a digital divide between these regions and developed regions and promote development of these regions. Third, the NTN communication has a long communication distance without significantly increasing communication costs. In addition, NTN communication has high stability. For example, NTN communication may not be limited by a natural condition, and may be used even in a case of a natural disaster.

A satellite communication system is a common NTN system. In a satellite communication system, a network device (for example, a base station) may be a satellite. The satellite may remain stationary relative to a surface of the earth, or the satellite may move relative to a surface of the earth. For example, a network device in a satellite communication system may be a geostationary earth orbit (geostationary earth orbit, GEO) satellite or a non-geostationary earth orbit (non-geostationary earth orbit, NGEO) satellite. In addition, depending on different orbital altitudes of satellites providing services, the NGEO satellite may be a highly-eccentric-orbit (highly-eccentric-orbit, HEO) satellite, a medium earth orbit (medium earth orbit, MEO) satellite, or a low earth orbit (low earth orbit, LEO) satellite. The following describes the LEO satellite and the GEO satellite in detail.

An orbital altitude of the LEO satellite ranges from 500 km to 1500 km. An orbital period is about 1.5 hours to 2 hours. A signal propagation delay of single-hop communication between users is generally less than 20 ms. A maximum satellite visible time is 20 minutes. A signal propagation distance is short, a link loss is small, and a transmit power requirement for a user terminal is not high.

An orbital altitude of the GEO satellite is 35786 km. A rotation period of the GEO satellite around the earth is 24 hours. A signal propagation delay of single-hop communication between users is generally 250 ms.

To ensure coverage of a satellite and improve a system capacity of an entire satellite communication system, the satellite may use a plurality of beams to cover the ground, that is, a plurality of beam foot prints (beam foot print) may form a field of view of the satellite (field of view of the satllite). For example, one satellite may form dozens or even hundreds of beams to cover the ground. One satellite beam may cover a terrestrial area of tens to hundreds of kilometers in diameter.

An NTN system may implement a network architecture based on a satellite. The satellite network architecture may include the following network elements: a gateway (gateway), a feeder link (feeder link), a service link (service link), a satellite, an inter-satellite link (inter satellite link, ISL), and the like.

There may be one or more gateways. The gateway may be configured to connect a satellite to a terrestrial public network. The gateway is generally located on the ground. The feeder link may be a link for communication between the gateway and the satellite. The service link may be a link for communication between a terminal device and the satellite. The inter-satellite link may exist in a regenerative payload network.

Depending on different functions that satellites provide in networks, networks may be classified into a transparent payload (transparent payload) network and a regenerative payload (regenerative payload) network. Details are as follows.

FIG. 2 is a schematic diagram of a satellite network architecture based on transparent payload. A satellite in this network may provide functions such as radio frequency filtering, frequency conversion, and amplification. However, the satellite in this network provides only transparent forwarding of signals, and does not change waveform signals forwarded by the satellite.

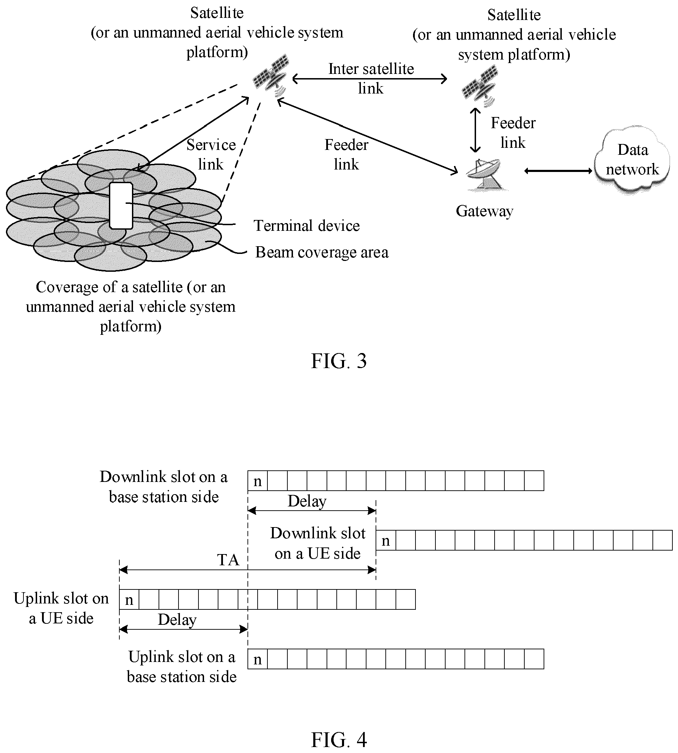

FIG. 3 is a schematic diagram of a regenerative payload network architecture. The regenerative payload network architecture may provide radio frequency filtering, frequency conversion, and amplification functions, and may further provide demodulation/decoding, routing/conversion, and coding/modulation functions. In the regenerative payload network architecture, a satellite may have some or all of functions of a base station. The inter-satellite link may exist in the regenerative payload network architecture.

An important feature of uplink transmission is orthogonal multiple access of different UEs in time and frequency, that is, uplink transmissions from different UEs in a same cell do not interfere with each other. In an LTE/NR terrestrial network, to ensure orthogonality of uplink transmissions and avoid intra-cell (intra-cell) interference, a gNB requires that signals, at a same instant but on different frequency domain resources, from different UEs arrive at the gNB with their time synchronized. To ensure time synchronization on the gNB side, NR supports an uplink timing advance mechanism. In the NR terrestrial network, an uplink clock on the gNB side is the same as a downlink clock on the gNB side. However, there is an offset between an uplink clock and a downlink clock on the UE side, and different UEs have different uplink timing advance values. Through proper control of an offset for each of different UEs, the gNB may control time at which uplink signals from the different UEs arrive at the gNB. Since a UE that is further away from the gNB has a larger transmission delay, the UE needs to transmit uplink data earlier than a UE closer to the gNB.

The gNB determines a timing advance (timing advance, TA) value for each UE by measuring uplink transmission from the UE. The gNB may transmit a TA command to the UE in two manners. Details are as follows.

Manner 1: obtaining initial TA.

In a random access procedure, the gNB determines a TA value by measuring a received preamble (preamble), and transmits the TA value to the UE by using a timing advance command (Timing Advance Command) field of a random access response (random access response, RAR) message.

Manner 2: adjusting TA in a radio resource control (radio resource control, RRC) connected state.

In a random access procedure, although the UE implements uplink synchronization with the gNB, timing of an uplink signal from the UE arriving at the gNB may change with time. Therefore, the UE is required to continuously update its uplink timing advance value, so as to maintain uplink synchronization. If TA for a UE is required to be corrected, the gNB transmits a timing advance command (which may also be referred to as a TA Command) to the UE, requiring the UE to adjust the uplink timing. The timing advance command is transmitted to the UE by using a medium access control control element (media access control control element, MAC CE). This MAC CE may also be referred to as a TA command MAC CE (namely, a MAC CE that carries a TA command).

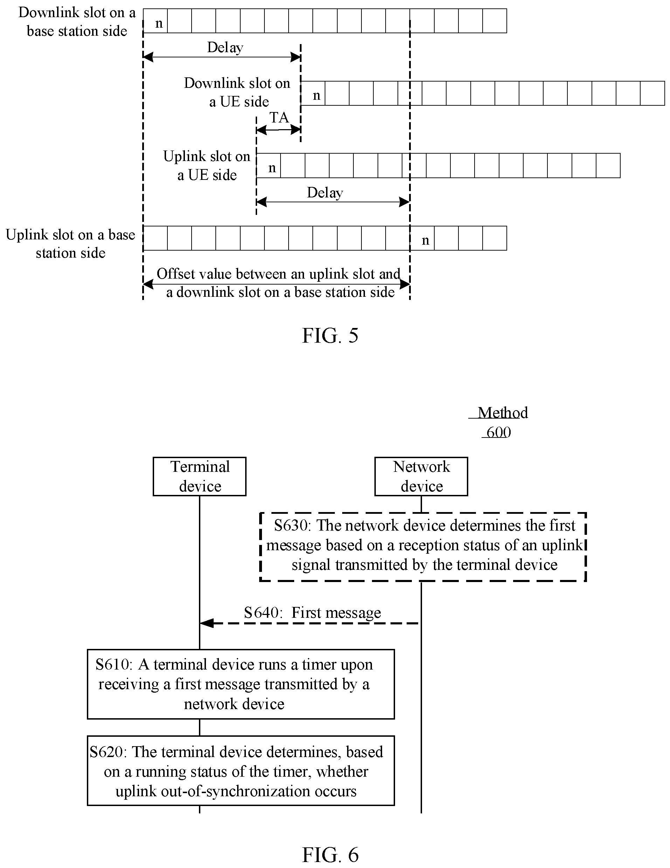

As in the NR system, in the NTN system, impact of TA is also required to be considered when the UE performs uplink transmission. The timing relationship in the NTN system may be classified into two cases, which are shown in FIG. 4 and FIG. 5 below, respectively.

As shown in FIG. 4, similar to an NR terrestrial network, a downlink slot and an uplink slot on the base station side are aligned with each other. In FIG. 4, a slot n is used as an example, and n is an integer. Accordingly, to align uplink transmission of the UE with the uplink slot on the base station side, the UE is required to use a relatively large TA value.

As shown in FIG. 5, there is an offset value between a downlink slot and an uplink slot on the base station side. In FIG. 5, a slot n is used as an example, and n is an integer. In this case, if the uplink transmission of the UE is expected to be aligned with the uplink slot on the base station side, the UE is required to use only a small TA value. However, in this case, the base station may need to perform additional scheduling to process a corresponding scheduling timing sequence.

It may be learned from the foregoing description that, in a conventional TN network, the UE may maintain its TA based on the TA command issued by the network. As in the TN system, in the NTN system (such as Release 17 (R17)), impact of TA is also required to be considered when the UE performs uplink transmission. In the NTN system, the UE generally has a GNSS positioning capability and a TA pre-compensation capability. The UE may estimate, based on a location of the UE and a location of a serving satellite, TA corresponding to a service link. Therefore, a TA determination method combining open loop and closed loop is introduced in NTN. Based on conclusions from current standardization conferences, for a UE in an idle state (RRC_IDLE)/inactive state (INACTIVE) and a connected state (RRC_CONNECTED), timing advance (that is, $T_{TA}$) thereof may be calculated according to the following formula:

$$T_{TA} = \left(N_{TA} + N_{TA,UE-specific} + N_{TA,common} + N_{TA,offset}\right) \times T_c$$

$N_{TA}$ represents a TA adjustment value controlled by the network device. The TA adjustment value is defined as 0 for a scenario of transmitting a physical random access channel (physical random access channel, PRACH), and may be subsequently updated by using a TA command in a message 2 (message 2, Msg2) or a message B (message B, MsgB) and a TA command MAC CE.

$N_{TA,UE-specific}$ represents the TA, corresponding to the service link, estimated by the UE, and is used for TA pre-compensation. For example, the UE may obtain the location of the satellite based on GNSS location information obtained by the UE and satellite ephemeris information broadcasted by a serving cell, so as to calculate a propagation delay of a service link from the UE to the satellite.

$N_{TA,common}$ represents common TA broadcasted by the network device, and includes any timing offset considered necessary by a network, for example, may be TA corresponding to a feeder link, or may be another value.

$N_{TA,offset}$ represents a preset offset value, for example, may be a fixed offset value for calculating TA.

In the foregoing formula, to acquire the TA corresponding to the service link (namely, $N_{TA,UE-specific}$), the UE in the RRC connected state is required to learn its own GNSS location information and is also required to learn a location of a serving satellite based on satellite ephemeris information of the serving cell. In addition, to calculate TA of the UE, the UE is also required to acquire the common TA (namely, $N_{TA,common}$).

In R17 IoT NTN (that is, a scenario where a terminal accesses the NTN by using narrow band internet of things (narrow band internet of things, NB-IoT) and enhanced machine type communication (enhanced machine type communication, eMTC)), a GNSS measurement module and a communications module of an internet of things (internet of things, IoT) terminal cannot be simultaneously operated (Simultaneous GNSS and NTN NB-IoT/eMTC operation is not assumed). In R17 IoT NTN, the IoT terminal can perform GNSS measurement to obtain location information only in the RRC IDLE or RRC INACTIVE state, and the GNSS module cannot be started in the RRC connected state. Therefore, the UE is required to perform measurement by using the GNSS module to obtain a GNSS location of the UE before entering the RRC connected state, determine, based on a status of the UE (for example, a moving state of the UE), a time length during which the GNSS location is valid, and report, to a network, remaining time in which the GNSS location is valid in RRC connection establishment/RRC re-establishment/RRC connection restoration. For the UE in the RRC connected state, when the GNSS location of the UE expires, since the UE cannot perform a GNSS operation in the RRC connected state, the UE cannot calculate TA. Therefore, the UE is required to return to the RRC IDLE state.

Currently, in Release 18 (R18), GNSS enhancement for an IoT terminal that accesses an NTN is discussed, and an IoT terminal that accesses an NTN may perform GNSS measurement in an RRC connected state (GNSS position fix).

However, based on current understanding, the IoT terminal is required to stop related operations of a communications module during GNSS measurement (which may also be referred to as a GNSS operation) performed by the IoT terminal.

To minimize a need for a UE in an RRC connected state to performs GNSS measurement, a possible manner is to introduce closed-loop frequency domain offset adjustment (which may also be referred to as closed-loop frequency adjustment or closed-loop frequency offset adjustment), that is, a network device transmits, based on a frequency offset of uplink reception (an uplink signal), a frequency adjustment command to the UE. In this way, even if there is an error in the GNSS location used by the UE, it can be corrected through closed-loop frequency domain offset adjustment. However, a current standard supports only closed-loop TA adjustment. After introduction of closed-loop frequency domain offset adjustment, how the terminal device determines uplink synchronization or uplink out-of-synchronization has become an urgent technical problem to be resolved.

To resolve one or more of the foregoing technical problems, this application provides a communication method and a communications apparatus, which can cause a terminal device to determine, after closed-loop frequency domain offset adjustment is introduced, whether uplink out-of-synchronization occurs.

With reference to FIG. 6 to FIG. 10, the following describes embodiments of this application in detail by using examples.

FIG. 6 is a schematic flowchart of a communication method according to an embodiment of this application. The method 600 shown in FIG. 6 may include steps S610 and S620, which are specifically as follows.

In S610, a terminal device runs a timer upon receiving a first message transmitted by a network device.

The terminal device may be in a connected state. Optionally, the terminal device may be a terminal device in an NTN, and the network device may be a network device in the NTN (such as a communication satellite or terrestrial base station).

The running, by the terminal device, the timer may include: starting or restarting, by the terminal device, the timer.

The first message may be used for performing frequency domain offset adjustment and/or timing advance TA adjustment by the terminal device. The frequency domain offset adjustment may also be referred to as frequency adjustment or frequency offset adjustment.

It should be noted that, different from open-loop frequency domain offset adjustment (open-loop frequency domain offset adjustment may refer to that the terminal device independently determines a frequency adjustment amount and performs frequency adjustment based on the frequency adjustment amount), the frequency domain offset adjustment in embodiments of this application refers to closed-loop frequency domain offset adjustment, that is, the network device determines a frequency adjustment amount based on an uplink signal transmitted by the terminal device and transmits a frequency adjustment command (the frequency adjustment command may indicate a frequency adjustment amount) to the terminal device, such that the terminal device may perform frequency adjustment according to the frequency adjustment command.

In this application, the network device may determine the first message based on the uplink signal transmitted by the terminal device. For example, before step S610, the method 600 may include steps S630 and S640, which are specifically as follows.

In S630, the network device determines the first message based on the reception status of the uplink signal transmitted by the terminal device.

Optionally, the reception status of the uplink signal may include a frequency offset (frequency offset) and/or a time offset (time domain offset) of the uplink signal, and the like. For example, the network device may determine the first message based on the frequency offset of the uplink signal.

In S640, the network device transmits the first message to the terminal device, so that the terminal device runs a timer upon receiving the first message.

Optionally, the first message may be carried in MAC CE signalling or RRC signalling. For example, the network device may transmit the first message to the terminal device by using MAC CE signalling or RRC signalling.

After running the timer, the terminal device may determine, based on the running state of the timer, whether uplink out-of-synchronization occurs. For details, reference is made to S620 below.

In S620, the terminal device determines, based on a running state of the timer, whether uplink out-of-synchronization occurs.

In embodiments of this application, the terminal device determining, based on the running state of the timer, whether uplink out-of-synchronization occurs may include a plurality of implementations, which are specifically as follows.

Manner 1: the terminal device may maintain a timer (for example, a first timer) for frequency domain offset adjustment (or TA adjustment). The terminal device may perform uplink adjustment (or uplink alignment) through frequency domain offset adjustment (or TA adjustment).

Optionally, the timer may include a first timer. The first timer may be run when the terminal device performs frequency domain offset adjustment (or TA adjustment). Optionally, duration of the first timer may be configured by the network device.

The terminal device may determine, based on a running state of the first timer, whether uplink out-of-synchronization occurs. Optionally, the terminal device may determine, based on whether the first timer expires, whether uplink out-of-synchronization occurs.

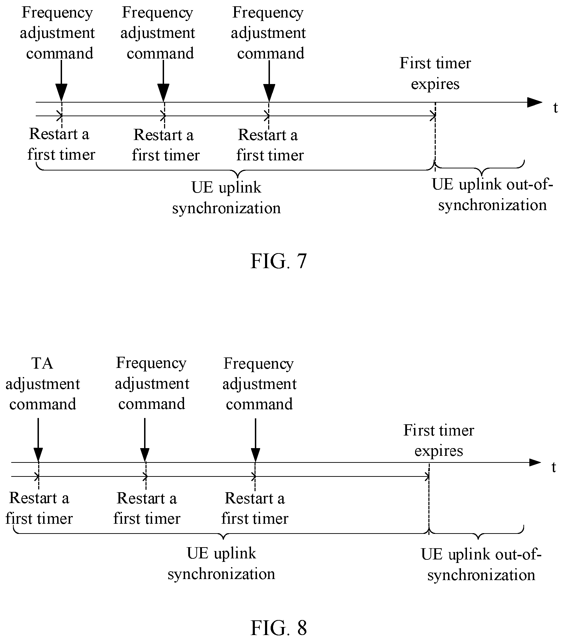

For example, as shown in FIG. 7, in a case in which a frequency adjustment command is received, the terminal device may start or restart the first timer. During running of the first timer (the first timer does not expire), the terminal device performs uplink synchronization. In a case in which the first timer expires, the terminal device may determine that uplink out-of-synchronization occurs.

Optionally, the first timer may be a timer in a conventional technology, for example, timeAlignmentTimer. Alternatively, the first timer may be a newly defined timer.

Manner 2: the terminal device may maintain a same timer (for example, the first timer) for both frequency domain offset adjustment and TA adjustment (such as closed-loop TA adjustment). The terminal device may perform uplink adjustment (or uplink alignment) through frequency domain offset adjustment and TA adjustment.

Optionally, the timer may include a first timer. The first timer may be run when the terminal device performs frequency domain offset adjustment and TA adjustment. Optionally, duration of the first timer may be configured by the network device.

In this case, the terminal device may determine, based on a running state of the first timer, whether uplink out-of-synchronization occurs. Optionally, the terminal device may determine, based on whether the first timer expires, whether uplink out-of-synchronization occurs.

For example, as shown in FIG. 8, in a case in which a TA adjustment command or a frequency adjustment command is received, the terminal device may start or restart the first timer. During running of the first timer, the terminal device performs uplink synchronization. In a case in which the first timer expires, the terminal device may determine that uplink out-of-synchronization occurs.

Optionally, the first timer may be a timer in a conventional technology, for example, timeAlignmentTimer. Alternatively, the first timer may be a newly defined timer.

Manner 3: the terminal device may use separate timers for frequency domain offset adjustment and TA adjustment (such as closed-loop TA adjustment), respectively. For example, the terminal device may maintain a timer (such as a second timer) for frequency domain offset adjustment, and maintain another timer (such as a third timer) for frequency domain offset adjustment. The terminal device may perform uplink adjustment (or uplink alignment) through frequency domain offset adjustment and TA adjustment.

Optionally, the timer may include at least one of the following: a second timer and a third timer. The second timer may be run when the terminal device performs frequency domain offset adjustment, and the third timer may be run when the terminal device performs TA adjustment.

Optionally, duration of the second timer may be configured by the network device. Optionally, duration of the third timer may be configured by the network device.

In this case, the terminal device may determine, based on the running state of the second timer and the running state of the third timer, whether uplink out-of-synchronization occurs.

In some embodiments, in a case in which at least one of the second timer or the third timer expires, the terminal device may determine that uplink out-of-synchronization occurs. At least one of the second timer or the third timer expiring may refer to that the second timer or the third timer expires, or both the second timer and the third timer expire.

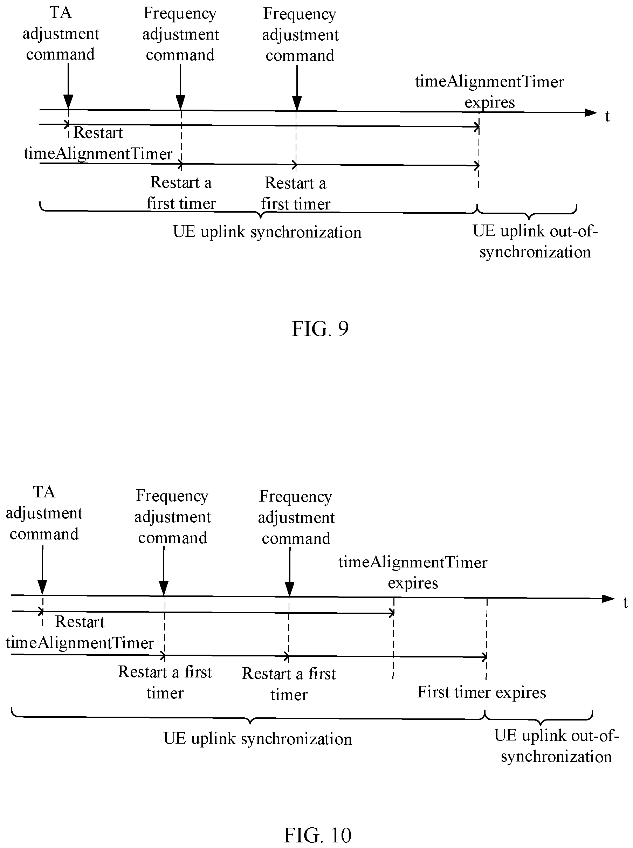

For example, as shown in FIG. 9, in a case in which a TA adjustment command is received, the terminal device may start or restart timeAlignmentTimer (the third timer). In a case in which a frequency adjustment command is received, the terminal device may start or restart the second timer. During running of the timeAlignmentTimer and the second timer, the terminal device performs uplink synchronization. In a case in which timeAlignmentTimer expires, the terminal device may determine that uplink out-of-synchronization occurs.

In some embodiments, in a case in which both the second timer and the third timer expire, the terminal device may determine that uplink out-of-synchronization occurs.

For example, as shown in FIG. 10, in a case in which a TA adjustment command is received, the terminal device may start or restart timeAlignmentTimer (the third timer). In a case in which a frequency adjustment command is received, the terminal device may start or restart the second timer. During running of the timeAlignmentTimer and/or the second timer, the terminal device performs uplink synchronization. Then, the timeAlignmentTimer first expires, then the second timer expires, and in a case in which both the second timer and the timeAlignmentTimer expire, the terminal device may determine that uplink out-of-synchronization occurs.

Optionally, the second timer may be a newly defined timer. The third timer may be a timer in a conventional technology, for example, timeAlignmentTimer.

In the above embodiment, the terminal device may perform uplink adjustment (or referred to as uplink alignment) through closed-loop frequency domain offset adjustment. In this way, even if there is an error in a GNSS location used by the terminal device, it may be corrected through closed-loop frequency domain offset adjustment. Therefore, uplink synchronization may be maintained by the terminal device as much as possible, thereby effectively reducing a need for performing GNSS measurement by the terminal device. Therefore, user experience can be improved.

Optionally, in a case in which uplink out-of-synchronization occurs, the terminal device may initiate random access. Optionally, in a case in which uplink out-of-synchronization occurs, the terminal device transmit to the network device no uplink transmission other than a preamble (preamble) or a message A (message A, MsgA).

Accordingly, in a case in which uplink out-of-synchronization occurs, the network device receives from the terminal device no uplink transmission other than a preamble or a MsgA.

In embodiments of this application, after closed-loop frequency domain offset adjustment is introduced, the terminal device may determine, based on the running state of the first timer, whether uplink out-of-synchronization occurs.

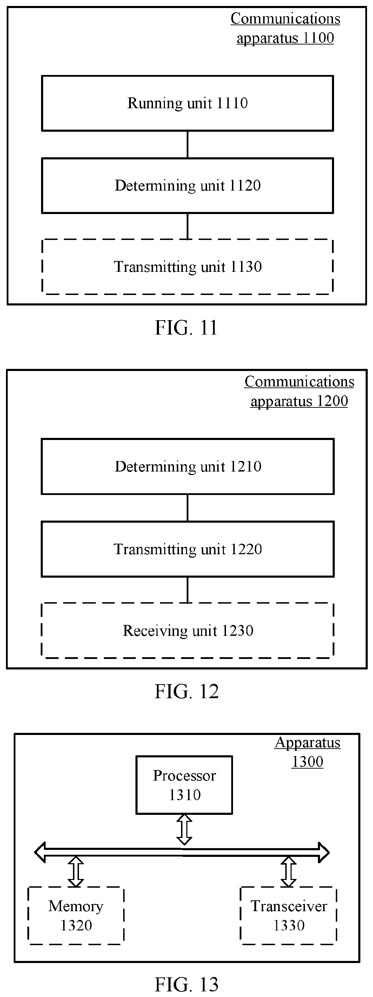

The method embodiments of this application are described above in detail with reference to FIG. 1 to FIG. 10. Apparatus embodiments of this application are described below in detail with reference to FIG. 11 to FIG. 13. It should be understood that the descriptions of the method embodiments correspond to descriptions of the apparatus embodiments, and therefore, for parts that are not described in detail, reference may be made to the foregoing method embodiments.

FIG. 11 is a schematic structural diagram of a communications apparatus according to an embodiment of this application. As shown in FIG. 11, the apparatus 1100 includes a running unit 1110 and a determining unit 1120. Details are as follows.

The running unit 1110 is configured to run a timer upon receiving a first message transmitted by a network device, where the first message is used for performing frequency domain offset adjustment and/or timing advance TA adjustment by the apparatus.

The determining unit 1120 is configured to determine, based on a running state of the timer, whether uplink out-of-synchronization occurs.

Optionally, the timer includes a first timer, the first timer is run when the apparatus performs the frequency domain offset adjustment and/or TA adjustment, and the running unit 1110 is further configured to run the first timer upon receiving the first message. The determining unit 1120 is further configured to determine, based on a running state of the first timer, whether uplink out-of-synchronization occurs.

Optionally, the determining unit 1120 is specifically configured to: in a case in which the first timer expires, determine that uplink out-of-synchronization occurs.

Optionally, the first timer is a timer timeAlignmentTimer.

Optionally, duration of the first timer is configured by the network device.

Optionally, the timer includes at least one of the following: a second timer and a third timer, where the second timer is run when the apparatus performs the frequency domain offset adjustment, and the third timer is run when the apparatus performs the TA adjustment.

Optionally, the running unit 1110 is further configured to run the second timer and/or the third timer upon receiving the first message transmitted by the network device. The determining unit 1120 is further configured to determine, based on a running state of the second timer and/or a running state of the third timer, whether uplink out-of-synchronization occurs.

Optionally, the determining unit 1120 is specifically configured to: in a case in which the second timer or the third timer expires, determine that uplink out-of-synchronization occurs; or in a case in which both the second timer and the third timer expire, determine that uplink out-of-synchronization occurs.

Optionally, the third timer is a timer timeAlignmentTimer.

Optionally, duration of the third timer is configured by the network device.

Optionally, the apparatus further includes a transmitting unit 1130. In a case in which uplink out-of-synchronization occurs, the transmitting unit 1130 transmits to the network device no uplink transmission other than a preamble preamble or a MsgA.

Optionally, the network device is a network device in a non-terrestrial network NTN. The apparatus is in a connected state.

Optionally, the running, by the apparatus, the timer includes: starting or restarting, by the apparatus, the timer.

FIG. 12 is a schematic structural diagram of a communications apparatus according to an embodiment of this application. The communications apparatus 1200 in FIG. 12 includes a determining unit 1210 and a transmitting unit 1220. Details are as follows.

The determining unit 1210 is configured to determine a first message based on a reception status of an uplink signal transmitted by a terminal device, where the first message is used for performing frequency domain offset adjustment and/or timing advance TA adjustment by the terminal device.

The transmitting unit 1220 is configured to transmit the first message to the terminal device, so that the terminal device runs a timer upon receiving the first message.

Optionally, the timer includes a first timer.

Optionally, the first timer is a timer timeAlignmentTimer.

Optionally, duration of the first timer is configured by the apparatus.

Optionally, the timer includes at least one of the following: a second timer and a third timer.

Optionally, the third timer is a timer timeAlignmentTimer.

Optionally, duration of the third timer is configured by the apparatus.

Optionally, the apparatus further includes a receiving unit 1230, and in a case in which uplink out-of-synchronization occurs on the terminal device, the receiving unit receives from the terminal device no uplink transmission other than a preamble preamble or a MsgA.

Optionally, the apparatus is a network device in a non-terrestrial network NTN, and the terminal device is in a connected state.

FIG. 13 is a schematic structural diagram of an apparatus according to an embodiment of this application. Dashed lines in FIG. 13 indicate that a unit or module is optional. The apparatus 1300 may be configured to implement the methods described in the foregoing method embodiments. The apparatus 1300 may be a chip or a communications apparatus.

The apparatus 1300 may include one or more processors 1310. The processor 1310 may support the apparatus 1300 in implementing the methods described in the foregoing method embodiments. The processor 1310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1300 may further include one or more memories 1320. The memory 1320 stores a program that may be executed by the processor 1310 to cause the processor 1310 to perform the methods described in the foregoing method embodiments. The memory 1320 may be separate from the processor 1310 or may be integrated into the processor 1310.

The apparatus 1300 may further include a transceiver 1330. The processor 1310 may communicate with another device or chip through the transceiver 1330. For example, the processor 1310 may transmit data to and receive data from another device or chip through the transceiver 1330.

An embodiment of this application further provides a computer-readable storage medium for storing a program. The computer-readable storage medium may be applied to the communications apparatus provided in embodiments of this application, and the program causes a computer to perform the method executed by the communications apparatus in various embodiments of this application.

An embodiment of this application further provides a computer program product. The computer program product includes a program. The computer program product may be applied to the communications apparatus provided in embodiments of this application, and the program causes a computer to perform the method executed by the communications apparatus in various embodiments of this application.

An embodiment of this application further provides a computer program. The computer program may be applied to the communications apparatus provided in embodiments of this application, and the computer program causes a computer to perform the method executed by the communications apparatus in various embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

## EP 4 615 073 A1

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, applied to a terminal device, wherein the communication method comprises:

   running, by the terminal device, a timer upon receiving a first message transmitted by a network device, wherein the first message is used for performing frequency domain offset adjustment and/or timing advance TA adjustment by the terminal device; and
   determining, by the terminal device based on a running state of the timer, whether uplink out-of-synchronization occurs.

2. The method according to claim 1, wherein the timer comprises a first timer, and the first timer is run when the terminal device performs the frequency domain offset adjustment and/or TA adjustment, and the method comprises:

   running, by the terminal device, the first timer upon receiving the first message; and
   determining, by the terminal device based on a running state of the first timer, whether uplink out-of-synchronization occurs.

3. The method according to claim 2, wherein the determining, by the terminal device based on the running state of the first timer, whether uplink out-of-synchronization occurs comprises:
   in a case in which the first timer expires, determining, by the terminal device, that uplink out-of-synchronization occurs.

4. The method according to claim 2 or 3, wherein the first timer is a timer timeAlignmentTimer.

5. The method according to any one of claims 1 to 4, wherein duration of the first timer is configured by the network device.

6. The method according to claim 1, wherein the timer comprises at least one of following: a second timer and a third timer, wherein the second timer is run when the terminal device performs the frequency domain offset adjustment, and the third timer is run when the terminal device performs the TA adjustment.

7. The method according to claim 6, wherein the method comprises:

   running, by the terminal device, the second timer and/or the third timer upon receiving the first message transmitted by the network device; and
   determining, by the terminal device based on a running state of the second timer and/or a running state of the third timer, whether uplink out-of-synchronization occurs.

8. The method according to claim 7, wherein the determining, by the terminal device based on a running state of the second timer and/or a running state of the third timer, whether uplink out-of-synchronization occurs comprises:

in a case in which the second timer expires or the third timer expires, determining, by the terminal device, that uplink out-of-synchronization occurs; or
in a case in which the second timer expires and the third timer expire, determining, by the terminal device, that uplink out-of-synchronization occurs.

9. The method according to any one of claims 6 to 8, wherein the third timer is a timer timeAlignmentTimer.

10. The method according to any one of claims 6 to 9, wherein duration of the third timer is configured by the network device.

11. The method according to any one of claims 1 to 10, further comprising:
in a case in which uplink out-of-synchronization occurs, transmitting, by the terminal device to the network device, no uplink transmission other than a preamble preamble or a MsgA.

12. The method according to any one of claims 1 to 11, wherein the network device is a network device in a non-terrestrial network NTN, and the terminal device is in a connected state.

13. The method according to any one of claims 1 to 12, wherein the running, by the terminal device, the timer comprises:
starting or restarting, by the terminal device, the timer.

14. A communication method, comprising:

determining, by a network device, a first message based on a reception status of an uplink signal transmitted by a terminal device, wherein the first message is used for performing frequency domain offset adjustment and/or timing advance TA adjustment by the terminal device; and
transmitting, by the network device, the first message to the terminal device, so that the terminal device runs a timer upon receiving the first message.

15. The method according to claim 14, wherein the timer comprises a first timer.

16. The method according to claim 15, wherein the first timer is a timer timeAlignmentTimer.

17. The method according to claim 15 or 16, wherein duration of the first timer is configured by the network device.

18. The method according to claim 14, wherein the timer comprises at least one of following: a second timer and a third timer.

19. The method according to claim 18, wherein the third timer is a timer timeAlignmentTimer.

20. The method according to claim 18 or 19, wherein duration of the third timer is configured by the network device.

21. The method according to any one of claims 14 to 20, further comprising:
in a case in which uplink out-of-synchronization occurs on the terminal device, receiving, by the network device from the terminal device, no uplink transmission other than a preamble preamble or a MsgA.

22. The method according to any one of claims 14 to 21, wherein the network device is a network device in a non-terrestrial network NTN, and the terminal device is in a connected state.

23. A communications apparatus, comprising:

a running unit, configured to run a timer upon receiving a first message transmitted by a network device, wherein the first message is used for performing frequency domain offset adjustment and/or timing advance TA adjustment by the apparatus; and

a determining unit, configured to determine, based on a running state of the timer, whether uplink out-of-synchronization occurs.

24. The apparatus according to claim 23, wherein the timer comprises a first timer, the first timer is run when the apparatus performs the frequency domain offset adjustment and/or TA adjustment, and the running unit is further configured to run the first timer upon receiving the first message; and
the determining unit is further configured to determine, based on a running state of the first timer, whether uplink out-of-synchronization occurs.

25. The apparatus according to claim 24, wherein the determining unit is specifically configured to:
in a case in which the first timer expires, determine that uplink out-of-synchronization occurs.

26. The apparatus according to claim 24 or 25, wherein the first timer is a timer timeAlignmentTimer.

27. The apparatus according to any one of claims 23 to 26, wherein duration of the first timer is configured by the network device.

28. The apparatus according to claim 23, wherein the timer comprises at least one of following: a second timer and a third timer, wherein the second timer is run when the apparatus performs the frequency domain offset adjustment, and the third timer is run when the apparatus performs the TA adjustment.

29. The apparatus according to claim 28, wherein the running unit is further configured to run the second timer and/or the third timer upon receiving the first message transmitted by the network device; and
the determining unit is further configured to determine, based on a running state of the second timer and/or a running state of the third timer, whether uplink out-of-synchronization occurs.

30. The apparatus according to claim 29, wherein the determining unit is specifically configured to: in a case in which the second timer or the third timer expires, determine that uplink out-of-synchronization occurs; or in a case in which the second timer and the third timer expire, determine that uplink out-of-synchronization occurs.

31. The apparatus according to any one of claims 28 to 30, wherein the third timer is a timer timeAlignmentTimer.

32. The apparatus according to any one of claims 28 to 31, wherein duration of the third timer is configured by the network device.

33. The apparatus according to any one of claims 23 to 32, wherein the apparatus further comprises a transmitting unit, and in a case in which uplink out-of-synchronization occurs, the transmitting unit transmits to the network device no uplink transmission other than a preamble preamble or a MsgA.

34. The apparatus according to any one of claims 23 to 33, wherein the network device is a network device in a non-terrestrial network NTN, and the apparatus is in a connected state.

35. The apparatus according to any one of claims 23 to 34, wherein the running, by the apparatus, the timer comprises: starting or restarting, by the apparatus, the timer.

36. A communications apparatus, comprising:

a determining unit, configured to determine a first message based on a reception status of an uplink signal transmitted by a terminal device, wherein the first message is used for performing frequency domain offset adjustment and/or timing advance TA adjustment by the terminal device; and
a transmitting unit, configured to transmit the first message to the terminal device, so that the terminal device runs a timer upon receiving the first message.

37. The apparatus according to claim 36, wherein the timer comprises a first timer.

38. The apparatus according to claim 37, wherein the first timer is a timer timeAlignmentTimer.

39. The apparatus according to claim 37 or 38, wherein duration of the first timer is configured by the apparatus.

40. The apparatus according to claim 36, wherein the timer comprises at least one of following: a second timer and a third timer.

41. The apparatus according to claim 40, wherein the third timer is a timer timeAlignmentTimer.

42. The apparatus according to claim 40 or 41, wherein duration of the third timer is configured by the apparatus.

43. The apparatus according to any one of claims 36 to 42, wherein the apparatus further comprises a receiving unit, and in a case in which uplink out-of-synchronization occurs on the terminal device, the receiving unit receives from the terminal device no uplink transmission other than a preamble preamble or a MsgA.

44. The apparatus according to any one of claims 36 to 43, wherein the apparatus is a network device in a non-terrestrial network NTN, and the terminal device is in a connected state.

45. A communications apparatus, comprising a memory, a transceiver, and a processor, wherein the memory is configured to store a program, the processor performs data transmission and reception by using the transceiver, and the processor is configured to invoke the program in the memory to cause the communications apparatus to execute the method according to any one of claims 1 to 13.

46. A communications apparatus, comprising a memory, a transceiver, and a processor, wherein the memory is configured to store a program, the processor performs data transmission and reception by using the transceiver, and the processor is configured to invoke the program in the memory to cause the communications apparatus to execute the method according to any one of claims 14 to 22.

47. A communications apparatus, comprising a processor configured to invoke a program from a memory to cause the communications apparatus to execute the method according to any one of claims 1 to 13.

48. A communications apparatus, comprising a processor configured to invoke a program from a memory to cause the communications apparatus to execute the method according to any one of claims 14 to 22.

49. A chip, comprising a processor, configured to invoke a program from a memory to cause a device on which the chip is installed to execute the method according to any one of claims 1 to 13.

50. A chip, comprising a processor, configured to invoke a program from a memory to cause a device on which the chip is installed to execute the method according to any one of claims 14 to 22.

51. A computer-readable storage medium, wherein the computer-readable storage medium stores a program, and the program causes a computer to execute the method according to any one of claims 1 to 13.

52. A computer-readable storage medium, wherein the computer-readable storage medium stores a program, and the program causes a computer to execute the method according to any one of claims 14 to 22.

53. A computer program product, comprising a program, wherein the program causes a computer to execute the method according to any one of claims 1 to 13.

54. A computer program product, comprising a program, wherein the program causes a computer to execute the method according to any one of claims 14 to 22.

55. A computer program, wherein the computer program causes a computer to execute the method according to any one of claims 1 to 13.

56. A computer program, wherein the computer program causes a computer to execute the method according to any one of claims 14 to 22.

100

120

110

120

FIG. 1

Satellite
(or an unmanned aerial vehicle
system platform)

Feeder link

Data
network

Service
link

Gateway

Terminal device

Beam coverage area

Coverage of a satellite (or an unmanned
aerial vehicle system platform)

FIG. 2

Satellite
(or an unmanned aerial vehicle system
platform)

Satellite
(or an unmanned aerial vehicle
system platform)

Inter satellite
link

Service
link

Feeder
link

Feeder
link

Data
network

Terminal device

Beam coverage area

Gateway

Coverage of a satellite (or an
unmanned aerial vehicle system
platform)

FIG. 3

Downlink slot on a
base station side

n

Delay

Downlink slot
on a UE side

n

TA

Uplink slot on
a UE side

n

Delay

Uplink slot on a
base station side

n

FIG. 4

Downlink slot on a
base station side | n | | | | | | | | | | | | |

Delay

Downlink slot on
a UE side | n | | | | | | | | | | | | | |

TA

Uplink slot on
a UE side | n | | | | | | | | | | | | | |

Delay

Uplink slot on a base
station side | | | | | | | | | n | | | |

Offset value between an uplink slot and
a downlink slot on a base station side

## FIG. 5

Method
600

| Terminal device | | Network device |

S630: The network device determines the first
message based on a reception status of an uplink
signal transmitted by the terminal device

S640: First message

S610: A terminal device runs a timer upon
receiving a first message transmitted by a
network device

S620: The terminal device determines, based
on a running status of the timer, whether
uplink out-of-synchronization occurs

## FIG. 6

Frequency adjustment command · Frequency adjustment command · Frequency adjustment command · First timer expires

Restart a first timer · Restart a first timer · Restart a first timer

UE uplink synchronization · UE uplink out-of-synchronization

**FIG. 7**

TA adjustment command · Frequency adjustment command · Frequency adjustment command · First timer expires

Restart a first timer · Restart a first timer · Restart a first timer

UE uplink synchronization · UE uplink out-of-synchronization

**FIG. 8**

TA
adjustment
command

Frequency
adjustment
command

Frequency
adjustment
command

timeAlignmentTimer
expires

Restart
timeAlignmentTimer

Restart a
first timer

Restart a
first timer

UE uplink synchronization

UE uplink out-of-
synchronization

t

FIG. 9

TA
adjustment
command

Frequency
adjustment
command

Frequency
adjustment
command

timeAlignmentTimer
expires

Restart
timeAlignmentTimer

Restart a first
timer

Restart a first
timer

First timer expires

UE uplink synchronization

UE uplink out-of-
synchronization

t

FIG. 10

FIG. 11

FIG. 12

FIG. 13

## INTERNATIONAL SEARCH REPORT

| International application No. |
| --- |
| **PCT/CN2022/130109** |

**A. CLASSIFICATION OF SUBJECT MATTER**

H04W56/00(2009.01)i

According to International Patent Classification (IPC) or to both national classification and IPC

**B. FIELDS SEARCHED**

Minimum documentation searched (classification system followed by classification symbols)

IPC:H04W, H04L, H04J

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 超时, 过期, 定时器, 计时器, 失步, 同步, 定时提前, 频率偏移, 频偏, 上行, alignment, expire, timer, synchroni+, loss, timing advanc+, frequency offset, uplink

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021163889 A1 (GUANGDONG OPPO MOBILE TELECOMMUNICATIONS CORP., LTD.) 26 August 2021 (2021-08-26) description, page 4, lines 3-16, and page 11, line 16 to page 12, line 8 | 1-56 |
| A | CN 110958670 A (HISENSE GROUP CO., LTD.) 03 April 2020 (2020-04-03) entire document | 1-56 |
| A | CN 115175295 A (DATANG MOBILE COMMUNICATIONS EQUIPMENT CO., LTD.) 11 October 2022 (2022-10-11) entire document | 1-56 |
| A | CN 114503702 A (BEIJING XIAOMI MOBILE SOFTWARE CO., LTD.) 13 May 2022 (2022-05-13) entire document | 1-56 |
| A | WO 2022067547 A1 (GUANGDONG OPPO MOBILE TELECOMMUNICATIONS CORP., LTD.) 07 April 2022 (2022-04-07) entire document | 1-56 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 July 2023** | **19 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2022/130109**

| Patent document cited in search report | | | Publication date (day/month/year) | Patent family member(s) | | | Publication date (day/month/year) |
|---|---|---|---|---|---|---|---|
| WO | 2021163889 | A1 | 26 August 2021 | US | 2023007608 | A1 | 05 January 2023 |
|  |  |  |  | EP | 4109984 | A1 | 28 December 2022 |
| CN | 110958670 | A | 03 April 2020 | None | | | |
| CN | 115175295 | A | 11 October 2022 | None | | | |
| CN | 114503702 | A | 13 May 2022 | None | | | |
| WO | 2022067547 | A1 | 07 April 2022 | US | 2023199686 | A1 | 22 June 2023 |

Form PCT/ISA/210 (patent family annex) (July 2022)